# DEMANDE DE BREVET EUROPEEN

(11) **EP 2 034 427 A1**
(43) Date de publication de la demande: **11.03.2009**
(21) Numéro de dépôt: 08290837.7
(22) Date de dépôt: 05.09.2008
(51) Int. Cl.: G06K 9/00

(54) **Procéde de reconnaissance de données graphiques**

(30) Priorité: 05.09.2007 FR 0706211
(71) Demandeur: Société Nationale des Chemins De Fer Français - SNCF, 75014 Paris (FR); Multitel, 7000 Mons (BE)
(72) Inventeur: Delcourt, Vincent, 76000 Rouen (FR); Kouadio, Régis, 93160 Noisy Le Grand (FR); Moreau, Daniel, 37700 Saint Pierre Des Corps (FR); Machy, Caroline, 59300 Valenciennes (FR); Desurmont, Xavier, 59100 Roubaix (FR); Mancas-Thillou, Céline, 59264 Onnaing (FR); Gosselin, Bernard, 87060 Soignies (FR)
(74) Mandataire: Cabinet Bloch & Gevers

(57) **Abrégé**

L'invention concerne un procédé de reconnaissance de données graphiques (1) dans une image numérisée (2), comportant au moins deux types de données différents, procédé comprenant :
- une étape (100) de détection d'un type de données graphiques de l'image numérisée;
- une étape (200) de nettoyage de l'image numérisée (2) en fonction du type de données graphiques détecté ;
- une étape de filtrage (300) des données graphiques (1), les données graphiques filtrées (13) étant morcelées ;
- une étape d'extraction (400) des données graphiques utiles (14),
le procédé étant caractérisé par le fait que l'étape d'extraction (400) comporte la reconstruction des données graphiques utiles (14) à partir des données graphiques filtrées (13) en fonction du type de données graphiques détecté. Ce procédé de reconnaissance automatisé limite le nombre des erreurs de reconnaissance et améliore le traitement des informations.

## Description

Le domaine de l'invention est celui de la reconnaissance de données et plus particulièrement de données graphiques issues d'équipements d'enregistrement des données de conduite ou de pilotage, de route ou de vol, qu'on trouve à bord des avions ou autres engins de locomotion, tels que les trains, les véhicules automobiles terrestres, comme les camions. L'invention concerne plus particulièrement la reconnaissance des données graphiques représentant des événements de conduite pour tous types d'engins ferroviaires.

De nombreux engins moteurs sont aujourd'hui équipées d'enregistreur "papier" réalisant des tracés au moyen d'un style, c'est-à-dire non numérique, qui produit des petits rouleaux de bande de papier, consignant des données graphiques représentant au maximum jusqu'à huit jours de conduite, chaque rouleau étant associé à une fiche de repérage de train qui porte des données de service, comme le nom du conducteur mécanicien, le parcours de sa machine, etc. Ces bandes d'enregistrement comportent différentes informations telles que des informations de vitesses et d'évènements de conduite qui sont inscrites simultanément lors du fonctionnement de l'engin à moteur.

L'exploitation des données graphiques des bandes d'enregistrement peut être fastidieuse. Non, pas tant quand on se limite à une vérification simple des règles majeures de sécurité, que quand on procède à une vérification approfondie des événements aux limites, moins visibles à l'oeil, comme par exemple un léger dépassement de la vitesse limite autorisée. Aujourd'hui, ces vérifications s'effectuent à l'aide de calques de gabarit dont la fonction est de vérifier séparément les informations de vitesse et les évènements de conduite, mais également de détecter des anomalies en les corrélant temporellement.

L'invention de la présente demande est née du problème de l'automatisation de la vérification de ces bandes graphiques d'enregistrement, d'une part, et de l'obligation légale prochaine de procéder à des vérifications approfondies de toutes les bandes d'enregistrement et non plus de 5 % d'entre elles comme aujourd'hui, d'autre part.

L'invention procède de i) l'option de la numérisation des données graphiques d'enregistrement et ii) la volonté d'automatiser la prise en charge des bandes d'enregistrement.

Finalement, le problème que s'est posé la demanderesse est celui de la lecture automatique des bandes d'enregistrement pour numériser leurs données et les rendre exploitables de manière informatique et ce, en reconnaissant les données utiles tout en minimisant le risque d'erreur d'interprétation.

Ainsi, l'invention concerne tout d'abord un procédé de reconnaissance de données graphiques dans une image numérisée, comportant au moins deux types de données différents, procédé comprenant:
- une étape de détection d'un type de données graphiques de l'image numérisée;
- une étape de nettoyage, ou de prétraitement, de l'image numérisée en fonction du type de données graphiques détecté ;
- une étape de filtrage des données graphiques, les données graphiques filtrées étant morcelées ;
- une étape d'extraction des données graphiques utiles,
   le procédé étant caractérisé par le fait que l'étape d'extraction comporte la reconstruction des données graphiques utiles à partir des données graphiques filtrées en fonction du type de données graphiques détecté.

Par types de données, on entend des courbes, des caractères alphanumériques ou des traits verticaux. Leur détection permet d'accélérer les temps de calcul et de reconnaissance. Les données graphiques pertinentes sont filtrées, reconstruites et extraites, les données collectées pouvant alors être facilement analysées. En outre, cela permet d'extraire chaque type de données selon des étapes qui lui sont propres, les différents types de données restant corrélées temporellement les unes avec les autres.

Chaque type de données est extrait de l'image numérisée en fonction de sa nature, ce qui garantit une grande qualité d'extraction et une facilité d'interprétation.

De préférence, on extrait simultanément les données graphiques utiles appartenant à un premier type de données et à un deuxième type de données.

En outre, les différents types de données sont numérisées simultanément ce qui permet de conserver la relation temporelle qui les liait sur une bande d'enregistrement.

De préférence encore, on corrèle temporellement les données graphiques utiles appartenant au premier type de données à celles du deuxième type de données.

De préférence, pour détecter le type de données graphiques, à l'étape de détection, on réalise une comparaison des données graphiques avec des modèles d'informations graphiques.

De préférence encore, la comparaison des données graphiques avec les modèles d'informations graphiques est réalisée par convolution.

Ainsi, on peut déterminer le type des données graphiques de l'image numérisée tout en observant les similarités, révélées par la convolution, entre les données graphiques et les modèles d'informations graphiques.

De préférence toujours, les modèles d'informations graphiques sont stockés dans une base de données.

Avantageusement, lors du prétraitement des données, on réalise une dilatation de l'image en fonction du type de données graphiques. On traite de manière différente les différents types de données afin de les rendre plus facilement interprétables.

La dilatation permet de mettre en exergue les données graphiques utiles tout en limitant l'influence de données parasites, ce qui facilite la reconnaissance des données graphiques utiles.

L'étape de filtrage des données graphiques utiles peut comprendre une comparaison par convolution des données nettoyées avec des unités d'informations utiles, les unités d'informations utiles pouvant être stockées dans une base de données.

L'étape de reconstruction des informations utiles peut comprendre une étape d'interpolation des informations graphiques utiles à partir des données graphiques filtrées.

De préférence, l'étape de reconstruction des données graphiques utiles est effectuée en réalisant une propagation en arc de cercle à partir des données graphiques filtrées et en interpolant une courbe entre les données graphiques filtrées afin que les données graphiques reconstruites forment une courbe continue.

L'invention sera mieux comprise à l'aide de la description suivante du mode de mise en oeuvre préféré du procédé de reconnaissance de l'invention, en référence au dessin annexé sur lequel
- la figure 1 représente un diagramme du procédé de reconnaissance de données graphiques de l'invention ;
- la figure 2 représente les données graphiques suite aux étapes de nettoyage et de filtrage mais avant l'étape d'extraction du procédé de la figure 1 ;
- la figure 3 représente une image numérisée avec des données graphiques utiles se présentant sous la forme de traits verticaux ;
- la figure 4 représente une image numérisée avec des données graphiques utiles se présentant sous la forme d'une courbe continue ;
- la figure 5A représente une étape de reconstruction des données graphiques utiles au moyen d'une propagation en arc de cercle ; et
- la figure 5B représente les données graphiques utiles reconstruites suite à l'étape de reconstruction de la figure 5A.

On considère donc ici un enregistreur « papier » qui a produit un petit rouleau de bande de papier.

Le rouleau de papier comporte des données graphiques représentant différentes catégories d'informations. On distingue particulièrement les informations dites de vitesse et de temps et les informations dites d'évènements de conduite. Ces informations sont corrélées temporellement. Dans cet exemple, les données ont été inscrites simultanément sur le rouleau de papier.

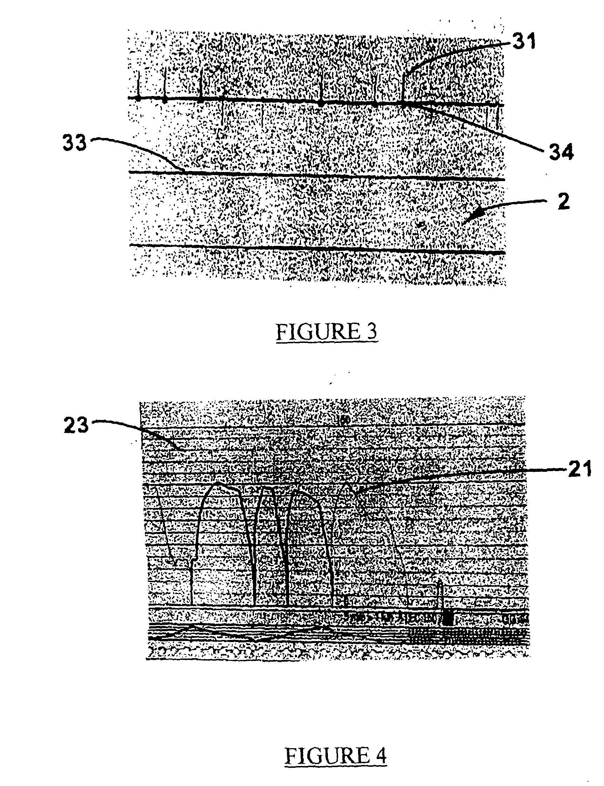

En référence à la figure 4, les informations de vitesse se présentent sous la forme d'une courbe continue 21 avec, en abscisse, la distance parcourue, et en ordonnée, la valeur de la vitesse. Les informations de temps se présentent de même sous la forme d'une courbe continue 21 avec en abscisse la distance parcourue. Les temps de montée et de descente de style dans la zone de tracé sont fixés et dépendent du type de bande traité. Lors du tracé des informations de vitesse, il arrive que des chocs ou des vibrations de l'engin moteur déplacent le stylet réalisant le tracé. La courbe est discontinue et les informations sont altérées. En référence à la figure 3, les informations d'évènements de conduite se présentent sous la forme de traits verticaux 31 de longueur constante, ces traits étant ascendants ou descendants.

En référence aux figures 3 et 4, les lignes de contrôle horizontales 23, 33 sont imprimées sur les bandes graphiques préalablement à l'insertion des rouleaux dans l'enregistreur de l'engin moteur. Les lignes de contrôle horizontales 23 permettent de graduer les différentes informations afin d'obtenir, par exemple, un ordre de grandeur de la vitesse. Les lignes de contrôle horizontales 33, appelées lignes de foi, sont des témoins d'alignement des styles. En ce qui concerne les informations d'évènements de conduite, les traits verticaux 31 prennent leur origine sur une ligne de contrôle 23, 33, afin de définir si le trait 31 est ascendant ou descendant.

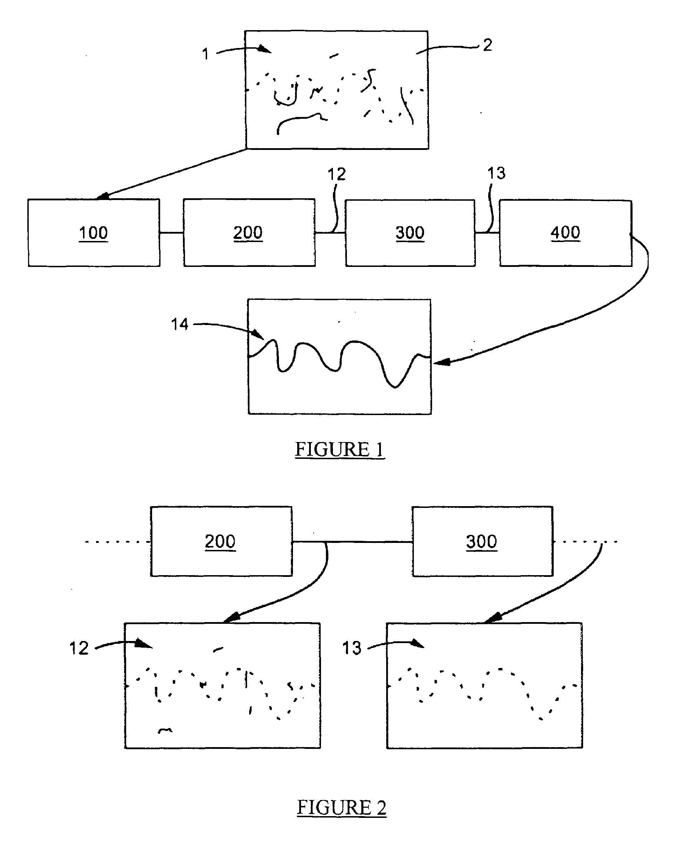

Après un délai réglementaire de huit jours de conduite, le rouleau est extrait de l'engin moteur et numérisé à l'aide d'un scanner numérique linéaire. En référence à la figure 1, la numérisation du rouleau permet de fournir une image numérisée 2 comportant des données graphiques 1, tracées lors de la conduite. La numérisation est ici réalisée en noir et blanc, mais il va de soi que le procédé peut s'appliquer également à une numérisation en couleur.

L'image numérisée comporte, dans cet exemple, des informations de vitesse et des informations d'événements de conduite qui sont représentées respectivement par une courbe et des traits verticaux.

Les données graphiques 1 comportent des données graphiques utiles 14 à analyser. Cependant, ces données utiles 14 ne sont pas facilement reconnaissables à cause des différences de contraste, d'épaisseur du tracé, de bruit, de discontinuité ou de la présence de parasites graphiques, tels que des tâches ou ratures dues à la manipulation des rouleaux.

En référence à la figure 1, le procédé de reconnaissance de données graphiques de l'invention comprend une première étape 100 de détection du type de données graphiques de l'image numérisée 2. Un type de données graphiques est un mode de représentation des données, les données pouvant se présenter sous forme de courbes, caractères alphanumériques, traits verticaux, etc.

A l'étape 100 de détection du type de données graphiques, on compare l'ensemble des données graphiques 1 présent sur l'image numérisée 2 avec des modèles d'informations graphiques dont le type est déterminé, les modèles d'informations graphiques étant stockés dans une base de données.

Dans cet exemple, la base de données comporte des modèles d'informations graphiques avec des données graphiques se présentant sous forme de courbes et sous forme de traits verticaux, correspondant, respectivement, aux informations de vitesse et d'évènements de conduite. La base de données des modèles d'informations graphiques est ici stockée sur un ordinateur. Il va de soi que celle-ci pourrait également être stockée sur un serveur ou équivalent.

Pour détecter le type de données graphiques 1, on réalise une convolution entre l'image 2 comportant les données graphiques 1 et les modèles d'informations graphiques. La convolution permet avantageusement de mettre en avant les similarités entre le modèle et les données graphiques utiles 14, tout en limitant l'influence des parasites graphiques présents sur l'image 2. On détermine le type de données de l'image 2 en sélectionnant le modèle pour lequel le taux de similarité est le plus élevé après convolution.

Étant donné que chaque type de données graphiques possède sa propre échelle de graduation, c'est-à-dire des lignes de contrôle, la reconnaissance de l'échelle de graduation permet également de déterminer le type de données graphiques. On réalise une convolution entre l'image 2 et des modèles de lignes de contrôle pour détecter le type de données.

La détection du type de données graphiques peut également être réalisée par détection du type de la bande graphique, tel que le positionnement des lignes de contrôle par rapport aux limites physiques de la bande de papier. Une reconnaissance des caractères d'identification imprimés dans la longueur de la bande graphique permettrait également de détecter le type de données.

Le type de données graphiques étant détecté, on procède à une étape 200 de nettoyage de l'image numérisée 2 en fonction du type de données graphiques détecté.

Cette étape de nettoyage 200, ou étape de prétraitement 200, permet de limiter l'influence des ratures ou tâches présentes sur l'image 2, tout en rendant plus visible les données graphiques utiles 14. On réalise une dilatation de l'image 2, cette dilatation étant paramétrée par le type de données graphiques détecté.

Par exemple, pour les données graphiques de l'image numérisée se présentant sous forme de traits verticaux 31, la dilatation est réalisée dans la direction horizontale afin d'augmenter l'épaisseur des traits verticaux 31, cette dilatation ayant, par ailleurs, peu d'influence sur des traits horizontaux. On réalise une augmentation du contraste couplée à un seuillage de niveau de gris. Le seuillage de niveau de gris permet de sélectionner uniquement les données graphiques selon leur niveau de gris, le seuillage supprimant les tâches et les ratures peu visibles. On obtient ainsi un ensemble de données graphiques nettoyées 12.

En référence à la figure 2, à la suite de l'étape de nettoyage 200, bien que les ratures et tâches aient été atténuées, l'image 2 comporte toujours des parasites graphiques. Il est alors nécessaire de filtrer les données graphiques nettoyées 12 afin de ne conserver que les données graphiques utiles 14.

On réalise, à l'étape de filtrage 300, une comparaison des données graphiques nettoyées 12 avec des unités d'informations utiles, les unités d'informations utiles étant ici stockées dans une base de données d'un serveur de données. Les unités d'informations utiles se présentent sous la forme de morceaux ou bribes de l'information utile recherchée. Ainsi, pour des informations utiles sous forme de traits verticaux 31, les unités d'informations utiles se présentent sous la forme de traits verticaux et horizontaux, correspondant respectivement aux informations d'évènements de conduite et aux lignes de contrôle 33 décrites précédemment.

Pour filtrer les données, on réalise une convolution entre les données graphiques nettoyées 12 et les unités d'informations utiles. La convolution permet avantageusement de mettre en avant les similarités entre les unités d'informations utiles et les données graphiques utiles 14, tout en limitant l'influence des parasites graphiques de l'image 2.

On réalise une segmentation des données graphiques en éliminant les traits verticaux 31 dont la longueur n'est pas convenable, c'est-à-dire dont la longueur ne correspond pas aux types de données détectés.

On réalise ensuite un filtrage basé sur les intensités et les niveaux de gris des données graphiques nettoyées 12. On réalise un seuillage sur les niveaux de gris pour obtenir des données graphiques filtrées 13, dépourvues de parasites graphiques.

Si l'information utile est altérée, suite, par exemple, à une discontinuité du tracé, il est nécessaire de reconstruire les données graphiques utiles 14 à une étape d'extraction 400.

La reconstruction des données graphiques utiles 14 est réalisée en fonction du type de données graphiques détecté. On interpole les données graphiques utiles 14 à partir des données graphiques filtrées 13. Par exemple, en référence à la figure 3, pour des informations utiles se présentant sous forme de traits verticaux 31, il est connu, par le type de données détecté, que les traits verticaux 31 sont de longueur constante et possèdent une extrémité connectée à une ligne de contrôle horizontale 33. Ainsi, dans cet exemple de mise en oeuvre, les traits verticaux 31 sont reconstruits afin qu'ils aient une longueur constante et soient connectés aux lignes de contrôle 33.

Suite à la reconstruction des données graphiques utiles 14, des données additionnelles peuvent être ajoutées pour faciliter le traitement des données utiles 14 par un logiciel de traitement et d'analyse. Ainsi, en référence à l'exemple précédent, des triangles équilatéraux 34 sont insérés sur la ligne de contrôle 33 au niveau des traits verticaux 31 (figure 3), les triangles 34 ayant un sommet orienté en fonction du sens du trait, les sommets étant orientés vers le haut, respectivement vers le bas, pour des traits verticaux ascendants, respectivement descendants.

Les données graphiques reconstruites 14 sont donc extraites à l'étape d'extraction 400, les données étant exportées vers un fichier image ou un tableau de valeurs. Ces données 14 sont ensuite transmises au logiciel de traitement et d'analyse, afin de révéler si le comportement du conducteur, lors de son service, était conforme à la législation des chemins de fer.

Dans un autre exemple de mise en oeuvre, l'image numérisée 2 comporte des données graphiques 1 se présentant sous forme de courbes 21 continues et discontinues (Figure 4).

Conformément au mode de mise en oeuvre précédent, pour détecter le type de données de l'image 2, on réalise une convolution entre l'image 2 comportant les données graphiques 1 et des modèles d'informations graphiques. La convolution entre ces deux images permet avantageusement de mettre en avant les similarités entre les deux entités, tout en limitant l'influence des parasites graphiques présents sur l'image 2. Le modèle d'informations graphiques le plus pertinent, c'est-à-dire celui ayant le meilleur taux de reconnaissance, comporte ici des courbes continues, le type de données graphiques étant alors connu. De manière similaire, on peut se servir des lignes de contrôle 23 pour déterminer le type de données.

Lors de l'étape 200 de nettoyage, on dilate l'image 2 dans le sens vertical. Étant donné que les informations de vitesse se présentent sous la forme d'une courbe continue 21, avec des sections de courbe sensiblement horizontales correspondant à des périodes de conduite à vitesse constante, une dilatation verticale permet d'augmenter l'épaisseur du tracé et de faciliter ainsi sa reconnaissance. On peut également réaliser une segmentation des données graphiques afin de ne conserver que les données graphiques sans la trame de fond de l'image.

A l'étape 300 de filtrage, on isole les informations « éloignées » des données graphiques utiles 14. On détecte, dans un premier temps, des ensembles de pixels connectés. On évalue, dans un deuxième temps, la distance qui sépare les ensembles les uns des autres. Si cette distance est supérieure à une valeur de seuil déterminée, on supprime l'ensemble de pixels connectés éloigné. En effet, comme l'information utile se présente sous la forme d'une courbe continue, tout ensemble de pixels isolé ne peut faire partie des données graphiques utiles 14. Cette étape de filtrage 300 permet avantageusement de ne conserver que les données graphiques utiles 14, tout en supprimant les parasites graphiques liés à la manipulation du rouleau. On obtient ainsi des données graphiques filtrées 13.

Les données graphiques filtrées 13 sont morcelées et se présentent sous forme de morceaux de courbe 21a, 21b non connectés; il est nécessaire de les reconstruire à l'étape de reconstruction 400. On reconstruit les données graphiques utiles 14 en réalisant une propagation en arc de cercle à partir des données graphiques filtrées 13. On interpole une courbe entre les morceaux de courbe non connectés 21a, 21b afin que les données graphiques reconstruites 14 forment une courbe continue 21.

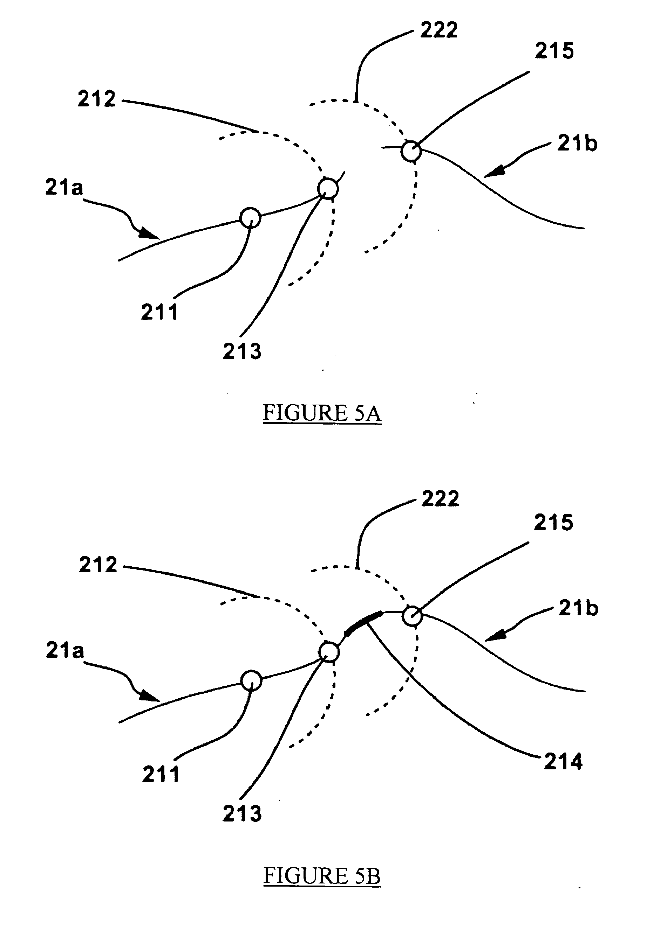

Pour reconstruire la courbe des données graphiques utiles 14, en référence à la figure 5A, on se place sur un point 211, dit point d'ancrage 211, du morceau de courbe 21a de données graphiques filtrées 13. On trace un arc de cercle 212 à partir de ce point d'ancrage 211, le rayon de l'arc de cercle 212 étant faible pour une propagation précise et grand pour une propagation rapide. Si l'arc de cercle 212 intersecte le morceau de courbe 21b des données graphiques filtrées 13 en un point d'intersection, on vérifie que ce point d'intersection et le point d'ancrage 211 sont reliés par un morceau de courbe continu.

Si l'arc de cercle ne coupe pas le morceau de courbe 21b et si le point d'intersection et le point d'ancrage 211 sont reliés par un morceau de courbe continue, on poursuit la propagation en arc de cercle, en itérant l'étape précédente, le point d'intersection 213 devenant le point d'ancrage 211.

Si le point d'intersection 215 de l'arc de cercle 222 et le point d'ancrage 213 ne sont pas reliés par une courbe continue (figure 5A), en référence à la figure 5B, on interpole un morceau de courbe 214 entre le point d'ancrage 213 et le point d'intersection 215. On peut relier les points 213, 215 à l'aide d'une droite, d'une fonction polynomiale ou de toute autre fonction d'interpolation, la courbe globale 21, ainsi reconstruite, étant alors continue.

Dans l'hypothèse où il n'existe pas d'intersection entre l'arc de cercle (212, 222) et un morceau de courbe 21a, 21b des données graphiques filtrées 13, on modifie le rayon de l'arc de cercle (212, 222) afin de trouver une intersection. La propagation est stoppée après un certain nombre de tentatives, ce nombre étant déterminé au préalable.

Les données graphiques reconstruites 14 sont donc extraites à l'étape d'extraction 400. Ces données peuvent ensuite être transmises au logiciel de traitement et d'analyse afin de révéler si le comportement du conducteur, lors de son service, était conforme à la législation des chemins de fer.

Les données graphiques reconstruites (courbes et traits verticaux) sont extraits simultanément de l'image numérisée ce qui permet leur analyse et leur traitement de manière corrélée par ledit logiciel, permettant ainsi de détecter des anomalies de conduite.

Ce traitement automatisé limite le nombre des erreurs de reconnaissance et améliore le traitement des informations.

Le procédé de reconnaissance de données graphiques peut-être avantageusement couplé à un scanner linéaire, le procédé de l'invention pouvant ainsi, en temps réel, extraire les données graphiques utiles 14, simultanément à la numérisation du rouleau. Cela permet, avantageusement, d'éviter de stocker des données numériques du scanner non traitées.

Le procédé de reconnaissance de données graphiques a été présenté pour des données graphiques sous forme de courbes 21 et de traits 31. Il va de soi que l'invention s'applique également à des données alphanumériques, des ensembles de points, des maillages ou tout autres formes graphiques.

Il va également de soi que les dilatations des données graphiques décrites ne se limitent pas aux seules directions horizontales ou verticales, une dilatation oblique, orientée (droite, gauche, haut, bas ...) ou basée sur le type de données détectées conviendrait également.

Un tel procédé permet avantageusement de conserver les informations de vitesse et les informations d'événements de conduite appariées lors de leur numérisation et interprétation. Les données sont extraites et traitées en fonction du type de données de l'image ce qui assure une bonne qualité d'extraction et, par conséquent, une facilité d'interprétation.

## Revendications

1. Procédé de reconnaissance de données graphiques (1) dans une image numérisée (2) comportant au moins deux types de données différents, procédé comprenant:
- une étape (100) de détection d'un type de données graphiques de l'image numérisée;
- une étape (200) de nettoyage de l'image numérisée (2) en fonction du type de données graphiques détecté ;
- une étape de filtrage (300) des données graphiques (1), les données graphiques filtrées (13) étant morcelées ;
- une étape d'extraction (400) des données graphiques utiles (14),
le procédé étant **caractérisé par le fait que** l'étape d'extraction (400) comporte la reconstruction des données graphiques utiles (14) à partir des données graphiques filtrées (13) en fonction du type de données graphiques détecté.

2. Procédé de reconnaissance de données graphiques selon la revendication 1, dans lequel, on extrait simultanément les données graphiques utiles appartenant à un premier type de données et à un deuxième type de données.

3. Procédé de reconnaissance de données graphiques selon la revendication 2, dans lequel, on corrèle temporellement les données graphiques utiles appartenant au premier type de données à celles du deuxième type de données.

4. Procédé de reconnaissance de données graphiques selon l'une des revendications 1 à 3, dans lequel, à l'étape de détection (100), on réalise une comparaison des données graphiques (1) avec des modèles d'informations graphiques.

5. Procédé de reconnaissance de données graphiques selon la revendication 4, dans lequel la comparaison des données graphiques (1) avec les modèles d'informations graphiques est réalisée par convolution.

6. Procédé de reconnaissance de données graphiques selon l'une des revendications 1 à 5, dans lequel, à l'étape (200) de nettoyage de l'image numérisée (2), on réalise une dilatation de l'image (2) en fonction du type de données graphiques.

7. Procédé de reconnaissance de données graphiques selon l'une des revendications 1 à 6, dans lequel, à l'étape (300) de filtrage des données graphiques utiles (14), on compare des données nettoyées (12) avec des unités d'informations utiles.

8. Procédé de reconnaissance de données graphiques selon la revendication 7, dans lequel les unités d'informations utiles sont stockées dans une base de données.

9. Procédé de reconnaissance de données graphiques selon l'une des revendications 7 à 8, dans lequel la comparaison des données nettoyées (12) avec les unités d'informations utiles est réalisée par convolution.

10. Procédé de reconnaissance de données graphiques selon l'une des revendications 1 à 9, dans lequel l'étape de reconstruction des informations utiles (14) comprend une interpolation des informations utiles (44) à partir des données graphiques filtrées (13).

11. Procédé de reconnaissance de données graphiques selon la revendication 10, dans lequel on reconstruit les données graphiques utiles (14) en réalisant une propagation en arc de cercle à partir des données graphiques filtrées (13) et en interpolant une courbe entre les données graphiques filtrées (13) afin que les données graphiques reconstruites forment une courbe continue.
